Europäisches Patentamt

European Patent Office

Office européen des brevets

(11) Veröffentlichungsnummer: **0 559 866 B1**

## (12) EUROPÄISCHE PATENTSCHRIFT

(45) Veröffentlichungstag der Patentschrift: **30.08.95**

(51) Int. Cl.6: **A63C 5/12**, B29C 71/00

(21) Anmeldenummer: **92919999.0**

(22) Anmeldetag: **25.09.92**

(86) Internationale Anmeldenummer:
**PCT/AT92/00121**

(87) Internationale Veröffentlichungsnummer:
**WO 93/05853 (01.04.93 93/09)**

---

(54) **VERFAHREN ZUR HERSTELLUNG EINES BANDFÖRMIGEN SKIBELAGSMATERIALS AUS ULTRAHOCHMOLEKULAREM POLYETHYLEN.**

---

(30) Priorität: **26.09.91 AT 1934/91**

(43) Veröffentlichungstag der Anmeldung:
**15.09.93 Patentblatt 93/37**

(45) Bekanntmachung des Hinweises auf die Patenterteilung:
**30.08.95 Patentblatt 95/35**

(84) Benannte Vertragsstaaten:
**AT CH DE FR LI**

(56) Entgegenhaltungen:
**EP-A- 0 186 995**
**EP-A- 0 340 211**
**EP-A- 0 447 356**
**DE-A- 3 113 360**
**FR-A- 2 658 425**

**PATENT ABSTRACTS OF JAPAN vol. 11, no. 259 (C-441)21. August 1987; & JP-A- 62 059637**

(73) Patentinhaber: **ISOSPORT VERBUNDBAUTEILE Ges.m.b.H.**
**Industriestrasse 2**
**A-7000 Eisenstadt (AT)**

(72) Erfinder: **SCHAMESBERGER, Robert**
**Am Bahndamm 12**
**A-7000 Eisenstadt (AT)**

---

**Beschreibung**

Technisches Gebiet

Die Erfindung betrifft ein Verfahren zur Herstellung eines bandförmigen Skibelagsmaterials aus ultrahochmolekularem Polyethylen, einen nach diesem Verfahren hergestellten Skibelag sowie dessen Verwendung.

Stand der Technik

Die wesentlichen Eigenschaften eines Skilaufflächenbelages sind die Abriebfestigkeit und die Wachsaufnahme. Die Abriebfestigkeit wird vorwiegend durch die Molmasse des Polyethylen bestimmt, während die Wachsaufnahme von der Dichte des Polyethylens und damit auch vom kristallinem Anteil im Polyethylen abhängt.

Um den Festigkeitsanforderungen, wie sie in der Skiindustrie an Skibläge aus Polyethylen gestellt werden, zu entsprechen, wird man versuchen, ein Polyethylen mit hoher Molmasse zu verarbeiten; dieser Weg führt zwangsläufig zu ultrahochmolekularem Polyethylen, wofür es nur eine beschränkte Anzahl von Verarbeitungsmethoden gibt. Eine bevorzugte verarbeitungsform in der Skiindustrie ist das Preßsintern. Die dadurch entstehenden Blöcke werden mittels eines Schälvorgangs zu bandförmigen Skibelagsmaterialien weiterverarbeitet.

Ein verfahren zur Weiterverarbeitung dieser bandförmigen Skibelagsmaterialien wird in der japanischen Offenlegungsschrift No. Hei 3-215 280 beschrieben. Dabei werden in einem diskontinuierlichen verfahren die in die entsprechenden Skilängen abgelängten Materialstücke erhitzt und in einem Tauchbad abgekühlt, sodaß das Verhältnis des amorphen Anteils zum kristallinen Anteil im ultrahochmolekularen Polyethylen derart eingestellt wird, daß eine gute Wachsaufnahme des Skibelags gegeben ist. Dieses Verfahren hat jedoch den Nachteil, daß durch das rasche Abkühlen des bandförmigen Skibelagsmaterials Verwerfungen an seiner Oberfläche auftreten, sodaß eine zusätzliche Nachbehandlung durch Recken notwendig wird.

Darstellung der Erfindung

Aufgabe der Erfindung ist es nun, ein einfaches und in wenigen Arbeitsschritten durchführbares Verfahren zur Herstellung eines bandförmigen Skibelagsmaterials aus ultrahochmolekularem Polyethylen anzugeben, das ermöglicht, den kristallinen Anteil an Polyethylen im endgefertigten Skibelagsmaterial derart einzustellen, daß dieses nicht nur eine hohe Abriebfestigkeit, sondern auch ein optimales Gleitverhalten aufweist.

Diese Aufgabe wird in dem erfindungsgemäßen Verfahren dadurch gelöst, daß ein durch Schneckenextrusion, Kolbenstrangpressen oder Preßsintern mit anschließendem Schälvorgang hergestelltes bandförmiges Skibelagsmaterial zunächst eine Heizzone, in der es gleichmäßig auf eine Temperatur von mehr als 140° erhitzt wird, und anschließend eine Kühlzone, in der es gleichmäßig auf eine Temperatur gleich oder niedriger als Raumtemperatur abgekühlt wird, kontinuierlich durchläuft.

Dieses Verfahren gewährleistet somit die Verbesserung von in an sich bekannter Weise hergestellten Skibelagsmaterialien, an welche in der Skiindustrie immer größere Anforderungen gestellt werden, insbesondere was die Wachsaufnahme und das Gleitverhalten des Skis auf dem Schnee anbelangt.

In einer vorteilhaften Ausgestaltung der Erfindung ist das Verfahren dadurch gekennzeichnet, daß das bandförmige Skibelagsmaterial eine Dicke von 0,5 bis 1.5 mm aufweist und in der Heizzone mittels Infrarotbestrahlung zwischen 10 und 25 sec, bevorzugt zwischen 13 und 20 sec, beheizt wird. Weiters ist das erfindungsgemäße Verfahren dadurch gekennzeichnet, daß das bandförmige Skibelagsmaterial in der Kühlzone auf eine Temperatur von 10 bis 20°C gekühlt wird, wobei die Kühlzone zumindest zum Teil durch eine gekühlte Kalibriervorrichtung gebildet wird. Diese Maßnahme ist insoferne vorteilhaft, daß das bandförmige Skibelagsmaterial auch nach dem Abkühlen seine glatte Oberflächenstruktur beibehält und somit die nach dem Abkühlen übliche Verwerfung der Oberfläche vermieden werden kann. Nach einem weiteren Merkmal der Erfindung ist diese dadurch gekennzeichnet, daß die Verweildauer des bandförmigen Skibelagsmaterials in der Kühlzone 8 bis 30 sec, bevorzugt 10 bis 25 sec, beträgt.

Die vorteilhaften Ausgestaltungen des erfindungsgemäßen Verfahrens wie eine gezielte Temperaturführung sowohl in der Heiz- als auch in der Kühlzone sowie die Verweilzeit des Skimaterials in der Heiz- und in der Kühlzone bewirken, daß das kristalline Gefüge des Skibelagsausgangsmaterials oberhalb einer Temperatur von 140°C langsam in der Heizzone zerfallen kann und anschließend in der Kühlzone durch gezielte Temperaturführung und wiederum entsprechende Verweilzeit kristallisieren kann. Der kristalline Anteil des nach dem erfindungsgemäßen Verfahren hergestellten Skibelags kann deshalb genauestens eingestellt werden und liegt vorteilhafterweise zwischen 25 und 60%.

Dieser Skibelag weist daher eine verbesserte Wachsaufnahme und ein verbessertes Gleitverhalten auf dem Schnee auf als die nach dem bekannten Verfahren wie beispielsweise Sinterverfahren hergestellten Skibeläge. Ferner wird die hohe Abriebfestigkeit durch die Molmasse des eingesetzten Polyethylens gewährleistet.

Das erfindungsgemäße Verfahren betrifft auch die Verwendung eines Skibelags zur Herstellung von Alpinskiern sowie von Langlaufskiern.

Bedingt durch die genaue Steuerung des kristallinen Anteils des Polyethylens im Skibelagsmaterials eignet sich daher der durch das erfindungsgemäße Verfahren hergestellte Skibelag sowohl für die Verwendung bei der Herstellung von Alpinskiern als auch bei der Verwendung bei der Herstellung von Langlaufskiern, obwohl in beiden Fällen unterschiedliche Ansprüche an das Gleitverhalten des Skibelags auf dem Schnee sowie an die Wachsaufnahme gestellt werden.

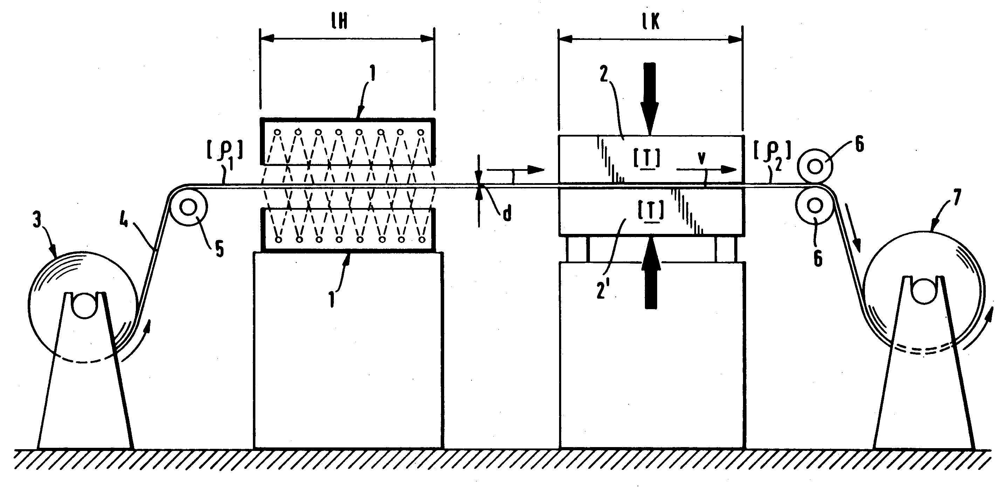

Beschreibung der Figur

Die Erfindung wird anhand einer Figur und von Ausführungsbeispielen näher erläutert.

Die Figur zeigt eine Skizze einer Anlage in Seitenansicht für die Durchführung des erfindungsgemäßen Verfahrens bestehend aus einer Heizzone (1) und der Kühlzone mit den Kalibrierplatten (2,2').

Das erfindungsgemäße Verfahren wird anhand folgender allgemeiner Arbeitsvorschrift erläutert:

Von einer Vorratsrolle 3 wird das Skibelagsmaterial 4, das gegebenenfalls durch an sich bekannte Verfahren wie Schneckenextrusion, Kolbenstrangpressen oder Preßsintern hergestellt wurde, abgezogen, über die Umlenkrolle 5 umgelenkt und mit der Geschwindigkeit v [m/min] der Heizzone (1), die beispielsweise mit IR-Heizelementen ausgestattet sein kann, zugeführt. In der Heizzone mit der Länge 1(H) schmilzt das ultrahochmolekulare Polyethylen bei einer Temperatur von über 140°C. Von der Verweilzeit des Skibelagsmaterials, die proportional zur Länge 1(H) ist, hängt es nun ab, inwieweit das Kristallgefüge zerfällt. Anschließend passiert dieses geschmolzene Skibelagsmaterial die Kühlzone, die aus zwei Kalibrierplatten (2, 2') besteht. Diese haben einerseits die Aufgabe, dem geschmolzenen Skibelagsmaterial eine Form zu geben und dieses gleichzeitig zu kühlen. Während des Kühlens kristallisiert das ultrahochmolekulare Polyethylen aus; auch dieser Vorgang hängt von der Verweilzeit des Skibelagsmaterials ab, die proportional zur Länge der Kühlzone 1(K) ist. Anschließend passiert das abgekühlte Skibelagsmaterial das Abzugsrollenpaar 6 und wird danach auf die Depotrolle 7 aufgerollt.

Der kristalline Anteil des hochmolekularen Polyethylens ist nicht linear proportional der Dichte; daher wurden die Dichten vor dem Erhitzen ($o_1$) und nach dem Abkühlen ($o_2$) gemessen. Die Verfahrensparame-ter dreier Ausführungsbeispiele sind in folgender Tabelle aufgelistet.

| | $\rho_1$ [g/cm$^3$] | $\rho_2$ [g/cm$^3$] | d[mm] | v[m/min] | 1(H)[cm] | 1(K)[cm] | ..T[°C] |
|---|---|---|---|---|---|---|---|
| 1 | 0.940 | 0.925 | 1.3 | 1.5 | 40 | 40 | 20 |
| 2 | 0.940 | 0.925 | 1.3 | 4 | 100 | 80 | 10 |
| 3 | 0.940 | 0.920 | 0.8 | 1.5 | 40 | 60 | 10 |

$\rho$1 Dichte vor dem Kristallisationsverfahren

$\rho$2 Dichte nach dem Kristallisationsverfahren d Dicke des Skibelages 1(H)......Länge der Heizzone 1(K) Länge der Kühlzone T Kühltemperatur

Die Werte für die jeweilige Verweilzeit ergeben sich aus der Formel $t = \frac{s}{v}$. Die Verweilzeit wird in Sekunden angegeben.

3

|   | t (H) | t (K) |
|---|-------|-------|
| 1 | 16 | 16 |
| 2 | 16 | 12 |
| 3 | 16 | 24 |

t (H) .........Verweilzeit in der Heizzone t (K) .........Verweilzeit in der Kühlzone

Der Zusammenhang zwischen Dichte und Krstiallisationsgrad wird in folgender Darstellung wiedergegeben:

Es wurde amorphem Polyethylen eine Dichte von 0.88 g/cm$^3$ zugegeordnet und kristallinem Polyethylen eine Dichte von 1.0 g/cm$^3$.

So läßt sich beispielweise dem Wert $\rho_2$ = 0.925 g/cm$^3$ ein Kristallisationsgrad von etwa 45% zuordnen. Somit kann man mit Hilfe des erfindungsgemäßen Verfahrens den Kristallisationsgrad des ultrahochmolekularen Polyethylens in auf bekannte Art hergestellten Skibelagsmaterialien steuern, wodurch ein Skibelag mit optimaler Abriebfestigkeit und Wachsaufnahme und optimalem Gleitverhalten auf dem Schnee ermöglichst wird.

Gewerbliche Verwertbarkeit

Der noch dem erfindungsgemäßen Verfahren hergestellte Skibelag wird zur Herstellung von Alpinskiern sowie Langlaufskiern verwendet.

**Patentansprüche**

1.  Verfahren zur Herstellung eines bandförmigen Skibelagsmaterials aus ultrahochmolekularem Polyethylen, dadurch gekennzeichnet, daß ein gegebenenfalls auf in an sich bekannter Weise, wie durch Schneckenextrusion, Kolbenstrangpressen oder Sintern mit anschließendem Schälvorgang in einem Dickenbereich von 0,5 bis 1,5 mm hergestelltes bandförmiges Skibelagsmaterial zunächst eine Heizzone, in der es gleichmäßig auf eine Temperatur von mehr als 140° erhitzt wird, und anschließend eine Kühlzone, in der es gleichmäßig auf eine Temperatur gleich oder niedriger als Raumtemperatur abgekühlt wird, kontinuierlich durchläuft.

2.  Verfahren nach Anspruch 1, dadurch gekennzeichnet, daß das bandförmige Skibelagsmaterial in der Heizzone mittels Infrarotbestrahlung beheizt wird.

**3.** Verfahren nach einem der Ansprüche 1 oder 2, dadurch gekennzeichnet, daß das bandförmige Skibelagsmaterial zwischen 10 und 25 sec, bevorzugt zwischen 13 und 20 sec, beheizt wird.

**4.** Verfahren nach einem der Ansprüche 1 bis 3, dadurch gekennzeichnet, daß das bandförmige Skibelagsmaterial in der Kühlzone, welche zumindest zum Teil durch eine gekühlte Kalibriervorrichtung gebildet wird, auf eine Temperatur von 10 bis 20°C gekühlt wird.

**5.** Verfahren nach einem der Ansprüche 1 bis 4, dadurch gekennzeichnet, daß die Verweilzeit des bandförmigen Skibelagsmaterials in der Kühlzone 8 bis 30 sec, bevorzugt 10 bis 25 sec, beträgt.

**6.** Skibelag hergestellt nach einem Verfahren gemäß einem der Ansprüche 1 bis 5, dadurch gekennzeichnet, daß er einen kristallinen Anteil von 25% bis 60.% aufweist.

**7.** Verwendung eines Skibelags nach Anspruch 6 zur Herstellung von Alpinskiern.

**8.** Verwendung eines Skibelags nach Anspruch 6 zur Herstellung von Langlaufskiern.

## Claims

**1.** A process for manufacturing a strip-like ski-coating material comprised of polyethylene of ultra high molecular weight, characterized in that a strip-like ski-coating material is produced in known manner for instance by screw extruder, ram extruder or press sintering and ensuing peeling to a thickness between 0,5 and 1,5 mm is continuously moved first into a heating zone to be uniformly heated to a temperature above 140°C and then into a cooling zone to be uniformly cooled to a temperature equal to or lower than ambient.

**2.** Process defined in claim 1, characterized in that strip-like ski-coating strip material is heated by infrared in the heating zone.

**3.** Process defined in either of claims 1 and 2, characterized in that the strip-like ski-coating material is heated from 10 to 25, preferably 13 to 20 seconds.

**4.** Process defined in one of claims 1 through 3, characterized in that the strip-like ski-coating material is cooled to a temperature of 10 to 20°C in the cooling zone which is formed at least in part by a cooled sizing apparatus.

**5.** Process defined in claims 1 through 4, characterized in that the dwell time of the strip-like ski-coating material is 8 to 30, preferably 10 to 25 seconds.

**6.** Ski coating manufactured by a process defined in one of claims 1 through 5, characterized in that its crystalline proportion is 25 to 60%.

**7.** Application of a ski coating defined in claim 6 to the manufacture of downhill skis.

**8.** Application of a ski coating defined in claim 6 to the manufacture of cross-country skis.

## Revendications

**1.** Procédé de fabrication d'un matériau de revêtement de ski en forme de bande obtenu à partir d'un polyéthylène de poids moléculaire extrêmement élevé, caractérisé en ce qu'un matériau de revêtement de skis en forme de bande, fabriqué selon une méthode bien connue, par exemple telle que extrusion sur extrudeuse à vis, emboutissage ou frittage, suivi d'une étape de pelage, et présentant une épaisseur de l'ordre de 0,5 à 1,5 mm, d'abord est passé en continu successivement dans une zone de chauffage où il est porté régulièrement à une température supérieure à 140°C, puis dans une zone de refroidissement, dans laquelle la température est ramenée régulièrement à une température égale ou inférieure à la température ambiante.

**2.** Procédé selon la revendication 1, caractérisé en ce que le matériau de revêtement de ski en forme de bande est chauffé dans la zone de chauffage au moyen d'un rayonnement infrarouge.

**3.** Procédé selon la revendication 1 ou 2, caractérisé en ce que le matériau de revêtement de skis en forme de bande est chauffé pendant une période de 10 à 25 secondes, de préférence de 13 à 20 secondes.

**4.** Procédé selon l'une quelconque des revendications 1 à 3, caractérisé en ce que le matériau de revêtement en forme de bande est refroidi à une température comprise entre 10 et 20°C dans la zone de refroidissement, sur une partie de laquelle au moins comportant des organes de calibrage refroidis.

**5.** Procédé selon l'une quelconque des revendications 1 à 4, caractérisé en ce que la durée de séjour du matériau de revêtement de skis en forme de bande dans la zone de refroidissement est de 8 à 30 secondes, de préférence de 10 à 25 secondes.

**6.** Revêtement de ski fabriqué à partir d'un procédé selon l'une quelconque des revendications 1 à 5, caractérisé en ce qu'il présente une teneur en parties cristallines de 25 à 60%.

**7.** Utilisation d'un revêtement de skis selon la revendication 6 pour la fabrication de skis alpins.

**8.** Utilisation d'un revêtement de skis selon la revendication 6 pour la fabrication de skis de fond.

EP 0 559 866 B1